# EUROPEAN PATENT APPLICATION

(11) **EP 4 811 741 A1**
(43) Date of publication of application: **23.09.2026**
(21) Application number: 24890636.4
(22) Date of filing: 11.11.2024
(51) Int. Cl.: H04L 41/40

(54) **NETWORK DIGITAL TWIN CONSTRUCTION METHOD AND APPARATUS, NETWORK ELEMENT DEVICE AND STORAGE MEDIUM**

(30) Priority: 16.11.2023 CN 202311528488
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HU, Yushuang, Beijing 100053 (CN)
(74) Representative: Herrero & Asociados, S.L.
(86) International application number: PCT/CN2024/131377
(87) International publication number: WO 2025/103281

(57) **Abstract**

The present disclosure relates to the technical field of communications, and in particular provides a network digital twin construction method and apparatus, a network element device, and a storage medium. The network digital twin construction method comprises: sending a query request to a first network element, the query request being used for querying related information of a target network element; receiving the related information of the target network element from the first network element; and on the basis of the related information of the target network element, generating a network digital twin function management object instance corresponding to the target network element. According to network digital twin provided in embodiments of the present disclosure, network digital twin construction is carried out by means of a digital twin technology on the basis of different requirement scenarios, thereby achieving the capabilities of the network digital twin for actual network full-lifecycle management, whole-network visualization, simulation prediction, closed-loop control, service level agreement guarantee and the like.

## Description

### CROSS-REFERENCE TO RELATED APPLICATIONS

The present application is based on and claims priority to Chinese Patent Application No. 202311528488.0, filed on November 16, 2023, the entire contents of which are incorporated herein by reference.

### TECHNICAL FIELD

The present disclosure relates to the field of communication technologies, and in particular, to a method, an apparatus, a network element device, and a storage medium for building a network digital twin.

### BACKGROUND

Digital twin technology establishes a virtual model for a physical entity in a digital manner, achieving the digitization of the physical world. By leveraging historical data, real-time data, and algorithm models, it enables the analysis, prediction, and improvement/optimization of physical entities, characterized by real-time performance and closed-loop operation. Digital twin integrates the previously separate virtual and real worlds, representing a key development theme for the next generation of cutting-edge technologies.

In the field of mobile communication, with the explosive growth in the number of accessing devices, the number of running services, and service diversity, communication networks are being organized in the form of network slicing. The diverse slice services pose significant challenges for overall network operation and maintenance as well as network resource management. If digital twin technology can be introduced into the mobile network domain, the availability of the current network can be evaluated before network deployment and implementation, enabling preemptive resource usage prediction and network deployment status prediction. Currently, the network availability technical monitoring schemes defined in existing standards are all based on existing network technologies. They do not consider the method for building the twin entity after introducing digital twin technology into the network, and cannot achieve capabilities such as network twin modeling according to different requirement scenarios in Network Digital Twin (NDT) management to realize full lifecycle management, full network visualization, simulation and prediction, closed-loop control, and Service Level Agreement assurance for a digital twin technology-enabled network.

### SUMMARY OF THE DISCLOSURE

The present disclosure is made in view of the above-mentioned problems. The present disclosure provides a method, an apparatus, a network element device, and a storage medium for building a network digital twin.

According to a first aspect of the present disclosure, a method for building a network digital twin is provided. The method includes:
sending a query request to a first network element; wherein the query request is configured to query information related to a target network element;
receiving information related to the target network element from the first network element; and
generating, based on the information related to the target network element, a network digital twin function managed object instance corresponding to the target network element.

In some embodiments, the generating, based on the information related to the target network element, a network digital twin function managed object instance corresponding to the target network element comprises:
generating configuration parameters for the network digital twin function managed object instance based on the information related to the target network element; and
verifying a network function of the network digital twin function managed object instance based on the configuration parameters.

In some embodiments, the verifying a network function of the network digital twin function managed object instance based on the configuration parameters further comprises:
in a case where the network function verification fails, regenerating configuration parameters for the network digital twin function managed object instance based on the information related to the target network element, and performing the verifying the network function of the network digital twin function managed object instance; and/or,
in a case where the network function verification succeeds, generating, based on the configuration parameters, the network digital twin function managed object instance corresponding to the target network element.

In some embodiments,
the first network element comprises a management data analytics system network element and/or a network function management function network element, and/or,
the query request comprises a network element identifier of the target network element and/or a network slice identifier of a network slice to which the target network element belongs.

In some embodiments, the information related to the target network element comprises at least one of network model information of the target network element or network parameter information corresponding to the network model information.

In some embodiments, the generating a network digital twin function managed object instance corresponding to the target network element comprises:
in a case where the network digital twin function managed object instance corresponding to the target network element does not exist, creating the network digital twin function managed object instance; and/or,
in a case where the network digital twin function managed object instance corresponding to the target network element exists, adjusting the network digital twin function managed object instance.

According to a second aspect of the present disclosure, an apparatus for building a network digital twin is provided. The apparatus includes:
a sending unit, configured to send a query request to a first network element; wherein the query request is configured to query information related to a target network element;
a receiving unit, configured to receive information related to the target network element from the first network element; and
a generating unit, configured to generate, based on the information related to the target network element, a network digital twin function managed object instance corresponding to the target network element.

In some embodiments, the generating unit is configured to:
generate configuration parameters for the network digital twin function managed object instance based on the information related to the target network element; and
verify a network function of the network digital twin function managed object instance based on the configuration parameters.

In some embodiments, the generating unit is further configured to:
in a case where the network function verification fails, regenerate configuration parameters for the network digital twin function managed object instance based on the information related to the target network element, and perform the verifying the network function of the network digital twin function managed object instance; and/or,
in a case where the network function verification succeeds, generate, based on the configuration parameters, the network digital twin function managed object instance corresponding to the target network element.

In some embodiments,
the first network element comprises a management data analytics system network element and/or a network function management function network element, and/or,
the query request comprises a network element identifier of the target network element and/or a network slice identifier of a network slice to which the target network element belongs.

In some embodiments, the information related to the target network element comprises at least one of network model information of the target network element or network parameter information corresponding to the network model information.

In some embodiments, the generating unit is configured to:
in a case where the network digital twin function managed object instance corresponding to the target network element does not exist, creating the network digital twin function managed object instance; and/or,
in a case where the network digital twin function managed object instance corresponding to the target network element exists, adjusting the network digital twin function managed object instance.

According to a third aspect of the present disclosure, a network element device is provided. The network element device includes:
a transceiver, configured to send a query request to a first network element; wherein the query request is configured to query information related to a target network element; and receive information related to the target network element from the first network element; and
a processor, configured to generate, based on the information related to the target network element, a network digital twin function managed object instance corresponding to the target network element.

According to a fourth aspect of the present disclosure, a non-transitory computer-readable storage medium is provided, for storing computer-readable instructions. When the computer-readable instructions are executed by a processor, the processor is caused to execute the method for building a network digital twin as described above.

As will be described in detail below, the method, apparatus, network element device, and storage medium for building a network digital twin according to embodiments of the present disclosure may implement network digital twin building according to different requirement scenarios through digital twin technology, to achieve capabilities such as full lifecycle management, full network visualization, simulation and prediction, closed-loop control, and Service Level Agreement (SLA) assurance of the actual network by the network digital twin. The method for building a network digital twin according to embodiments of the present disclosure may support building a 5G network/network slice formed by connecting various physical devices (such as hosts, routers, switches, etc.) and media (fiber optic cables, cables, twisted pairs, etc.). The method for building a network digital twin according to embodiments of the present disclosure may integrate all existing data in a network management system, and create an accurate network digital twin model based on real-time data and offline historical data. This model may digitally display the operational status and health status of network infrastructure, including physical network devices, logical network devices, ports, links, etc. More specifically, the method for building a network digital twin according to embodiments of the present disclosure may simulate the full scale of a physical network or only a part thereof.

It is to be understood that both the foregoing general description and the following detailed description are exemplary and explanatory only and are not restrictive of the claimed technology.

### BRIEF DESCRIPTION OF THE DRAWINGS

Through more detailed description of embodiments of the present disclosure with reference to the accompanying drawings, the above and other purposes, features, and advantages of the present disclosure will become more apparent. The drawings are provided to provide further understanding of embodiments of the present disclosure, constitute a part of the specification, and are intended to explain the present disclosure together with embodiments of the present disclosure, but do not constitute limitations to the present disclosure. In the drawings, the same reference numerals usually represent a same part or operation.
FIG. 1 is a schematic diagram illustrating a scenario for applying a method for building a network digital twin according to some embodiments of the present disclosure.
FIG. 2 is a flowchart illustrating a method for building a network digital twin according to some embodiments of the present disclosure.
FIG. 3 is a schematic diagram illustrating a method for building a network digital twin according to some embodiments of the present disclosure.
FIG. 4 is a flowchart illustrating a method for building a network digital twin according to some embodiments of the present disclosure.
FIG. 5 is a block diagram illustrating an apparatus for building a network digital twin according to some embodiments of the present disclosure.
FIG. 6 is a block diagram illustrating a network element device according to some embodiments of the present disclosure.
FIG. 7 is a schematic diagram illustrating a computer-readable storage medium according to some embodiments of the present disclosure.

### DETAILED DESCRIPTION

To make the objectives, technical solutions, and advantages of the present disclosure clearer, exemplary embodiments of the present disclosure will be described in detail below with reference to the accompanying drawings. It is apparent that the described embodiments are only a part, not all, of the embodiments of the present disclosure. It should be understood that the present disclosure is not limited by the exemplary embodiments described herein.

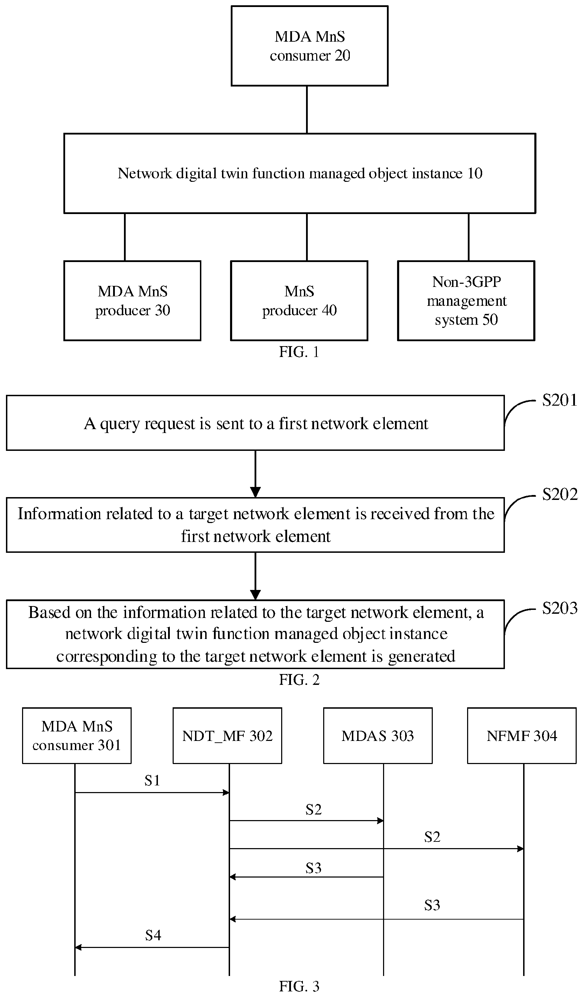

First, a scenario for applying a method for building a network digital twin according to some embodiments of the present disclosure is described with reference to FIG. 1.

The method for building a network digital twin according to some embodiments of the present disclosure is configured to introduce a digital twin entity into a communication network management system to simulate an operating environment and an operating status of an end-to-end network as a whole, while performing real-time interaction with various network entities. Various types of operating information of the network entities may be input to the digital twin entity in real time to build network digital twin services. Building a network digital twin requires interoperability with the network management system, delivering relevant network services and network element configurations corresponding to physical entities to each network element in the twin network. Although the original network resource model is reused, it is also necessary to create a Network Function Managed Object Instance (MOI). The network digital twin may simulate all operations in the real physical communication network and has the capability to analyze and predict future communication network conditions and performance. For example, some artificial intelligence models such as deep learning and machine learning may be introduced into the entire network digital twin system to assist network management optimization, network prediction, capacity planning, etc. By modeling network services in the network digital twin, training data may be continuously supplemented and updated into the model through input information from physical entities, thereby forming an adaptive mechanism within the network digital twin model to achieve more precise closed-loop network operation and maintenance.

As shown in FIG. 1, a network digital twin function managed object instance 10 generated by the method for building a network digital twin according to some embodiments of the present disclosure may be built in response to a request from a Management Data Analytics (MDA) Management Services (MnS) consumer 20. An MDA MnS producer 30 may then provide information related to a network element corresponding to the network digital twin function managed object instance 10 for building. Furthermore, the network digital twin function managed object instance 10 may further interact with other entities such as an MnS producer 40 and a non-3GPP management system 50.

Hereinafter, the method for building a network digital twin according to some embodiments of the present disclosure will be further described with reference to FIGS. 2 to 4.

FIG. 2 is a flowchart illustrating a method for building a network digital twin according to some embodiments of the present disclosure. As shown in FIG. 2, at block S201, a query request is sent to a first network element.

In some embodiments, a Network Digital Twin Management Function (NDT_MF) network element may send the query request to the first network element. The first network element may be a Management Data Analytics System (MDAS) network element or a Network Function Management Function (NFMF) network element.

In a case where the first network element is a MDAS network element, the query request is configured to query information about a managed object of the MDAS network element, the managed object being a target network element. The query request may include a network element identifier of the target network element, or a network slice identifier of a network slice to which the target network element belongs.

In a case where the first network element is a NFMF network element, the query request is configured to query information about a managed object of the NFMF network element, the managed object being a target network element. The query request may include a network element identifier of the target network element, or a network slice identifier of a network slice to which the target network element belongs.

The query request is configured to obtain user information at the granularity of a Public Land Mobile Network (PLMN), a Single Network Slice Selection Assistance Information (S-NSSAI), a Data Network Name (DNN), or an intranet group of a virtual network.

At block S202, information related to a target network element is received from the first network element.

In some embodiments, the information related to the target network element received from the first network element includes network model information of the target network element, network parameter information corresponding to the network model information, etc. The network model information may include, for example, service configuration information and network slice configuration information. The network parameter information may include, for example, parameters of a managed object instance corresponding to a network function and values of the parameters.

More specifically, network models may include two categories: a base model and a function model. The base model refers to a network element model and a topology model of a twin network body corresponding to a physical entity network established based on information such as basic network element configuration, environment information, operating status, and link topology, to achieve a real-time and precise description of the physical network. The function model refers to various models established for specific application scenarios by fully utilizing network data in a data warehouse, to provide various models such as network analysis, simulation, diagnosis, prediction, and assurance.

The function models may be built according to network types, and there may be models serving a single network domain (such as a mobile access network, a transport network, a core network, a bearer network, etc.) or models serving multiple network domains.

The function models may be built according to function types, and models for such as status monitoring, traffic analysis, security drills, fault diagnosis, and quality assurance may be built.

The function models may be built according to a scope of application, and may be divided into general models and dedicated models.

The function models may be built according to network lifecycle management, and may be divided into models for planning, construction, maintenance, optimization, and operation.

Various function models may be combined with each other to build data models serving more specific business scenarios, such as signaling storm control based on digital twin, network service Service Level Agreement (SLA) assurance based on digital twin, network cloud cross-layer transparency sub-scenario, high-risk operation simulation sub-scenario, and network cloud resource deployment optimization sub-scenario.

At block S203, based on the information related to the target network element, a network digital twin function managed object instance corresponding to the target network element is generated.

In some embodiments, the configuration of the network digital twin function managed object instance corresponding to the target network element is the same as the actual configuration of the target network element. That is, the network digital twin function managed object instance can interact with the actual network in real time.

The method for building a network digital twin according to embodiments of the present disclosure may implement network digital twin building according to different requirement scenarios through digital twin technology, to achieve capabilities such as full lifecycle management, full network visualization, simulation and prediction, closed-loop control, and Service Level Agreement (SLA) assurance of the actual network by the network digital twin. The method for building a network digital twin according to embodiments of the present disclosure may support building a 5G network/network slice formed by connecting various physical devices (such as hosts, routers, switches, etc.) and media (fiber optic cables, cables, twisted pairs, etc.). The method for building a network digital twin according to embodiments of the present disclosure may integrate all existing data in a network management system, and create an accurate network digital twin model based on real-time data and offline historical data. This model may digitally display the operational status and health status of network infrastructure, including physical network devices, logical network devices, ports, links, etc. More specifically, the method for building a network digital twin according to embodiments of the present disclosure may simulate the full scale of a physical network or only a part thereof.

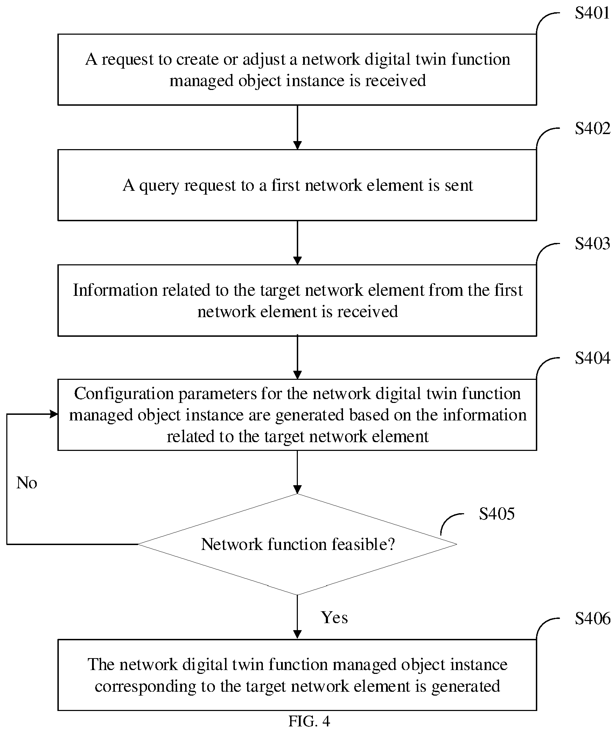

FIG. 3 is a schematic diagram illustrating a method for building a network digital twin according to some embodiments of the present disclosure. FIG. 4 is a flowchart illustrating a method for building a network digital twin according to some embodiments of the present disclosure.

As shown in FIG. 3, an MDA MnS consumer 301 may send a network function Managed Object Instance (MOI) request to an NDT_MF 302 in S1. S1 in FIG. 3 corresponds to operation S401 in FIG. 4, which is receiving a request to create or adjust a network digital twin function managed object instance. That is, in a case where the network digital twin function managed object instance does not exist, the network function MOI request is configured to create the network digital twin function managed object instance. In a case where the network digital twin function managed object instance exists, the network function MOI request is configured to adjust the network digital twin function managed object instance.

Furthermore, as shown in FIG. 3, the NDT_MF 302 may initiate a query request corresponding to the network function MOI request to an MDAS 303 or an NFMF 304 in S2. S2 in FIG. 3 corresponds to operation S402 in FIG. 4, which is sending a query request to a first network element. The first network element may be the MDAS 303 or the NFMF 304. The query request is configured to query information about a managed object of the MDAS 303 or the NFMF 304, the managed object being a target network element. The query request may include a network element identifier of the target network element, or a network slice identifier of a network slice to which the target network element belongs.

Furthermore, as shown in FIG. 3, the MDAS 303 or the NFMF 304 may return a query result to the NDT_MF 302 in S3, in response to the query request in S2. S3 in FIG. 3 corresponds to operation S403 in FIG. 4, which is receiving information related to the target network element from the first network element. The information related to the target network element received from the first network element may include network model information of the target network element, network parameter information corresponding to the network model information, etc. The network model information may include, for example, service configuration information and network slice configuration information. The network parameter information may include, for example, parameters of a managed object instance corresponding to a network function and values of the parameters.

Furthermore, as shown in FIG. 3, the NDT_MF 302 may return a result to the MDA MnS consumer 301 in S4, in response to the network function MOI request in S1. S4 in FIG. 3 corresponds to operations S404 to S406 in FIG. 4. In operation S404, configuration parameters for the network digital twin function managed object instance are generated based on the information related to the target network element. In operation S405, configuration verification is performed, i.e., it is determined whether a corresponding function can be achieved based on the configuration parameters generated in operation S404. For example, parameter values are input in a parameter list, and expected results are obtained based on the internal logic of the network digital twin. When it is determined in operation S405 that the network function is not feasible (i.e., for example, a difference between the expected result output by the network digital twin and the actual result corresponding to the real network is greater than a predetermined threshold), the process returns to operation S404 to adjust the generation of configuration parameters for the network digital twin function managed object instance. When it is determined in operation S405 that the network function is feasible, then in operation S406, the network digital twin function managed object instance corresponding to the target network element is generated.

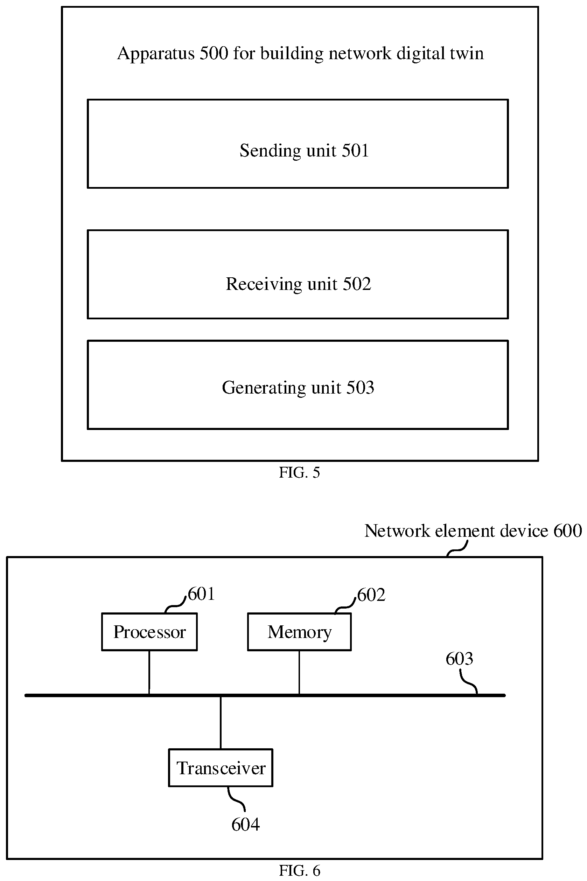

FIG. 5 is a block diagram illustrating an apparatus for building a network digital twin according to some embodiments of the present disclosure.

As shown in FIG. 5, an apparatus 500 for building a network digital twin according to some embodiments of the present disclosure includes a sending unit 501, a receiving unit 502, and a generating unit 503. Those skilled in the art will readily appreciate that these unit modules may be implemented individually by hardware, individually by software, or by a combination thereof in various manners, and the present disclosure is not limited to any of them.

Specifically, the sending unit 501 is configured to send a query request to a first network element, the query request being configured to query information related to a target network element. The receiving unit 502 is configured to receive information related to the target network element from the first network element. The generating unit 503 is configured to generate, based on the information related to the target network element, a network digital twin function managed object instance corresponding to the target network element.

More specifically, the generating unit 503 is configured to generate configuration parameters for the network digital twin function managed object instance based on the information related to the target network element; verify a network function of the network digital twin function managed object instance based on the configuration parameters; in a case where the network function verification fails, regenerate configuration parameters for the network digital twin function managed object instance based on the information related to the target network element, and perform the operation of verifying the network function of the network digital twin function managed object instance; and/or, in a case where the network function verification succeeds, generate, based on the configuration parameters, the network digital twin function managed object instance corresponding to the target network element. The generating unit 503 is configured to: in a case where the network digital twin function managed object instance corresponding to the target network element does not exist, create the network digital twin function managed object instance; and/or, in a case where the network digital twin function managed object instance corresponding to the target network element exists, adjust the network digital twin function managed object instance.

The first network element may include a management data analytics system network element and/or a network function management function network element. The query request may include a network element identifier of the target network element and/or a network slice identifier of a network slice to which the target network element belongs. The information related to the target network element may include at least one of network model information of the target network element or network parameter information corresponding to the network model information.

The apparatus for building a network digital twin according to some embodiments of the present disclosure may implement network digital twin building according to different requirement scenarios through digital twin technology, to achieve capabilities such as full lifecycle management, full network visualization, simulation and prediction, closed-loop control, and Service Level Agreement (SLA) assurance of the actual network by the network digital twin. The apparatus for building a network digital twin according to embodiments of the present disclosure may support building a 5G network/network slice formed by connecting various physical devices (such as hosts, routers, switches, etc.) and media (fiber optic cables, cables, twisted pairs, etc.). The apparatus for building a network digital twin according to embodiments of the present disclosure may integrate all existing data in a network management system, and create an accurate network digital twin model based on real-time data and offline historical data. This model may digitally display the operational status and health status of network infrastructure, including physical network devices, logical network devices, ports, links, etc. More specifically, the apparatus for building a network digital twin according to embodiments of the present disclosure may simulate the full scale of a physical network or only a part thereof.

FIG. 6 is a block diagram illustrating a network element device according to some embodiments of the present disclosure.

As shown in FIG. 6, a network element device 600 according to some embodiments of the present disclosure includes a processor 601, a memory 602, and a transceiver 604. These units are connected to each other via a bus 603. The transceiver 604 is configured to send a query request to a first network element, the query request being configured to query information related to a target network element, and receive information related to the target network element from the first network element. The processor 601 is configured to generate, based on the information related to the target network element, a network digital twin function managed object instance corresponding to the target network element. The network element device 600 according to some embodiments of the present disclosure may be the aforementioned Network Digital Twin Management Function (NDT_MF) network element.

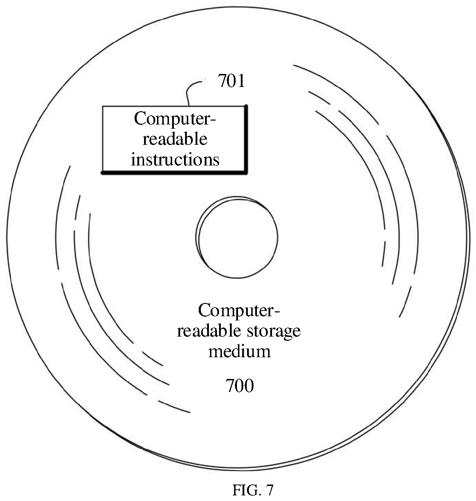

FIG. 7 is a schematic diagram illustrating a computer-readable storage medium according to some embodiments of the present disclosure. As shown in FIG. 7, a computer-readable storage medium 700 according to some embodiments of the present disclosure has computer-readable instructions 701 stored thereon. When the computer-readable instructions 701 are executed by a processor, the method for building a network digital twin described with reference to the above drawings is executed. The computer-readable storage medium includes, but is not limited to, for example, volatile memory and/or non-volatile memory. The volatile memory may include, for example, random access memory (RAM) and/or cache memory, etc. The non-volatile memory may include, for example, read-only memory (ROM), hard disk, flash memory, optical disc, magnetic disk, etc.

The foregoing describes the method, apparatus, network element device, and storage medium for building a network digital twin according to embodiments of the present disclosure with reference to the drawings. The method for building a network digital twin according to embodiments of the present disclosure may implement network digital twin building according to different requirement scenarios through digital twin technology, to achieve capabilities such as full lifecycle management, full network visualization, simulation and prediction, closed-loop control, and Service Level Agreement (SLA) assurance of the actual network by the network digital twin. The method for building a network digital twin according to embodiments of the present disclosure may support building a 5G network/network slice formed by connecting various physical devices (such as hosts, routers, switches, etc.) and media (fiber optic cables, cables, twisted pairs, etc.). The method for building a network digital twin according to embodiments of the present disclosure may integrate all existing data in a network management system, and create an accurate network digital twin model based on real-time data and offline historical data. This model may digitally display the operational status and health status of network infrastructure, including physical network devices, logical network devices, ports, links, etc. More specifically, the method for building a network digital twin according to embodiments of the present disclosure may simulate the full scale of a physical network or only a part thereof.

Those skilled in the art may appreciate that the units and algorithm operations of the examples described in connection with the embodiments disclosed herein may be implemented in electronic hardware, or a combination of computer software and electronic hardware. Whether these functions are performed in hardware or software depends on the specific application and design constraints of the technical solution. Those skilled in the art may apply different methods to implement the described functions for each specific application, but such implementation should not be considered as going beyond the scope of the present disclosure.

The basic principles of the present disclosure are described above in connection with specific embodiments. However, it should be pointed out that advantages, beneficial effects, etc. mentioned in the present disclosure are merely illustrative and not limiting, and cannot be considered that these advantages, beneficial effects, etc. are necessary for various embodiments of the present disclosure. In addition, the specific details disclosed above are for the purpose of illustration and ease of understanding, and are not limiting. The above details do not limit the present disclosure to implementation using the specific details described above.

The block diagrams of devices, apparatuses, equipment, and systems in the present disclosure are only illustrative and are not intended to require or imply that connection, arrangement, and configuration must be performed in the manner shown in the block diagrams. As will be recognized by those skilled in the art, these devices, apparatuses, equipment, and systems can be connected, arranged, and configured in any manner. Words such as "include", "comprise", "have", etc. are open words meaning "including but not limited to" and can be used interchangeably therewith. The word "or" as used herein means "and/or" unless the context clearly indicates otherwise. The word "such as" as used herein means "such as but not limited to" and can be used interchangeably therewith.

In addition, as used herein, the "or" in an enumeration of items beginning with "at least one" indicates a disjunctive enumeration, so that, for example, an enumeration of "at least one of A, B, or C" means A or B or C, or AB or AC or BC, or ABC (i.e., A and B and C). Furthermore, the word "exemplary" does not mean that the described example is preferred or better than other examples.

It should also be noted that in the systems and methods of the present disclosure, components or operations can be decomposed and/or recombined. These decompositions and/or recombinations should be considered as equivalent solutions of the present disclosure.

Various changes, substitutions, and alterations to the techniques described herein may be made without departing from the technology taught by the appended claims. Moreover, the scope of the claims of the present disclosure is not limited to the specific aspects of the processes, machines, manufactures, compositions of matter, means, methods, and actions described above. Processes, machines, manufactures, compositions of matter, means, methods, or actions currently existing or later to be developed that perform substantially the same function or achieve substantially the same result as the corresponding aspects described herein can be utilized. Accordingly, the appended claims include within their scope such processes, machines, manufactures, compositions of matter, means, methods, or actions.

The above description of the disclosed aspects is provided to enable any person skilled in the art to make or use the present disclosure. Various modifications to these aspects will be readily apparent to those skilled in the art, and the general principles defined herein may be applied to other aspects without departing from the scope of the present disclosure. Therefore, the present disclosure is not intended to be limited to the aspects shown herein but is to be accorded the widest scope consistent with the principles and novel features disclosed herein.

The foregoing description is given for purposes of illustration and description. Moreover, this description is not intended to limit embodiments of the present disclosure to the forms disclosed herein. Although a number of exemplary aspects and embodiments have been discussed above, those skilled in the art will recognize certain variations, modifications, changes, additions, and sub-combinations thereof.

## Claims

1. A method for building a network digital twin, comprising:
sending a query request to a first network element; wherein the query request is configured to query information related to a target network element;
receiving information related to the target network element from the first network element; and
generating, based on the information related to the target network element, a network digital twin function managed object instance corresponding to the target network element.

2. The method according to claim 1, wherein the generating, based on the information related to the target network element, a network digital twin function managed object instance corresponding to the target network element comprises:
generating configuration parameters for the network digital twin function managed object instance based on the information related to the target network element; and
verifying a network function of the network digital twin function managed object instance based on the configuration parameters.

3. The method according to claim 2, wherein the verifying a network function of the network digital twin function managed object instance based on the configuration parameters further comprises:
in a case where the network function verification fails, regenerating configuration parameters for the network digital twin function managed object instance based on the information related to the target network element, and performing the verifying the network function of the network digital twin function managed object instance; and/or,
in a case where the network function verification succeeds, generating, based on the configuration parameters, the network digital twin function managed object instance corresponding to the target network element.

4. The method according to claim 1, wherein,
the first network element comprises a management data analytics system network element and/or a network function management function network element, and/or,
the query request comprises a network element identifier of the target network element and/or a network slice identifier of a network slice to which the target network element belongs.

5. The method according to any one of claims 1 to 4, wherein the information related to the target network element comprises at least one of network model information of the target network element or network parameter information corresponding to the network model information.

6. The method according to any one of claims 1 to 4, wherein the generating a network digital twin function managed object instance corresponding to the target network element comprises:
in a case where the network digital twin function managed object instance corresponding to the target network element does not exist, creating the network digital twin function managed object instance; and/or,
in a case where the network digital twin function managed object instance corresponding to the target network element exists, adjusting the network digital twin function managed object instance.

7. An apparatus for building a network digital twin, comprising:
a sending unit, configured to send a query request to a first network element; wherein the query request is configured to query information related to a target network element;
a receiving unit, configured to receive information related to the target network element from the first network element; and
a generating unit, configured to generate, based on the information related to the target network element, a network digital twin function managed object instance corresponding to the target network element.

8. The apparatus according to claim 7, wherein the generating unit is configured to:
generate configuration parameters for the network digital twin function managed object instance based on the information related to the target network element; and
verify a network function of the network digital twin function managed object instance based on the configuration parameters.

9. The apparatus according to claim 8, wherein the generating unit is further configured to:
in a case where the network function verification fails, regenerate configuration parameters for the network digital twin function managed object instance based on the information related to the target network element, and perform the verifying the network function of the network digital twin function managed object instance; and/or,
in a case where the network function verification succeeds, generate, based on the configuration parameters, the network digital twin function managed object instance corresponding to the target network element.

10. The apparatus according to claim 7, wherein,
the first network element comprises a management data analytics system network element and/or a network function management function network element, and/or,
the query request comprises a network element identifier of the target network element and/or a network slice identifier of a network slice to which the target network element belongs.

11. The apparatus for building a network digital twin according to any one of claims 7 to 10, wherein the information related to the target network element comprises at least one of network model information of the target network element or network parameter information corresponding to the network model information.

12. The apparatus for building a network digital twin according to any one of claims 7 to 10, wherein the generating unit is configured to:
in a case where the network digital twin function managed object instance corresponding to the target network element does not exist, creating the network digital twin function managed object instance; and/or,
in a case where the network digital twin function managed object instance corresponding to the target network element exists, adjusting the network digital twin function managed object instance.

13. A network element device, comprising:
a transceiver, configured to send a query request to a first network element; wherein the query request is configured to query information related to a target network element; and receive information related to the target network element from the first network element; and
a processor, configured to generate, based on the information related to the target network element, a network digital twin function managed object instance corresponding to the target network element.

14. A non-transitory computer-readable storage medium for storing computer-readable instructions; wherein, when the computer-readable instructions are executed by a processor, the processor is caused to execute the method according to any one of claims 1 to 6.

15. A computer program product, comprising a computer program; wherein, when the computer program is executed by a processor, the method according to any one of claims 1 to 6 is implemented.
